# EUROPEAN PATENT SPECIFICATION

(11) **EP 0 399 427 B1**
(45) Date of publication and mention of the grant of the patent: **02.02.1994**
(21) Application number: 90109580.2
(22) Date of filing: 21.05.1990
(51) Int. Cl.: C09D 5/38, C09D 133/00, C09D 167/00, B05D 1/36

(54) **Metallic water borne base coat of improved stability and appearance**
Wässerige Metall-Basisbeschichtung mit verbesserten Stabilität und Aussehen
Revêtement de fond métallisé aqueux à stabilité et apparence modifiées

(30) Priority: 23.05.1989 US 355959
(43) Date of publication of application: 28.11.1990
(73) Proprietor: BASF Corporation, Clifton, New Jersey 07015-6001 (US)
(72) Inventor: Anderson, James L., Grand Rapids, Ohio 43522 (US); McClanahan, Craig J., Bowling Green, Ohio 43402 (US)
(74) Representative: Münch, Volker, Dr.

(56) References cited:
- AT-B- 381 499
- DE-A- 3 321 180
- US-A- 4 346 149

## Description

### FIELD OF INVENTION

The present invention is concerned with a water borne coating composition designed for the coating of transportation vehicles. The invention is related to coating compositions primarily for a base coat of a multi-coat system which includes primers and transparent clear coats, particularly with base coats containing metallic pigments, based on acrylic latex polymers.

### BACKGROUND AND PRIOR ART

It is customary in the painting of an automobile that a series of coatings, be applied to the substrate. The first chat being the primer followed by the base coat and finally the clear coat. The base coat provides the good decorative quality to the final finish via organic and inorganic pigments. In many automobile finishes, a metallic finish is desired. To obtain this metallic effect, metallic pigments are present in the base coat, typically aluminum flakes.

In the current market place, automobile coatings, especially base coats, contain a high level of organic solvent. With increasing concern about the volatile organic emissions into the atmosphere, an intensive effort in research and development in coatings containing mainly water as the solvent with a small level of organic solvent is under way. An example of such an effort is U.S. patent No. 4,730,020 which discloses a water-dilutable coating composition comprising specifically selected acrylic copolymers, solvent blends, coloring and/or optical effect pigments and polymer dispersions. To obtain the desired optical effect of the metallic flakes, the correct combination of acrylic copolymer and solvent blend must be achieved. An aqueous thermosetting acrylic resin described by U.S. Patent No. 3,862,071 controls the metallic pigment orientation by the addition of a water insoluble copolymer. Microgel technology as described by GB-PS No. 2,073,609 also results in the proper metal orientation. Also disclosed in DE No. 3,210,051 is an attempt to control metallic pigment orientation using polyurethane dispersions. Cellulosic esters have also been used to control metal fixation as disclosed in DE No 3,216,549.

In general, the metal fixation in base coats is achieved by a rheology modifiers such as inorganic and organic thickeners. All previous rheology modifiers or rheology control agents for water borne coatings have poor shelve stability, poor weathering characteristics and are cumbersome to use. The particular rheology control agent used in this invention results in a non-mottled, high head-on-brightness, outstanding flop, and high quality finish, even in the case of a silver metallic base coat and does not suffer from the problems cited earlier.

Typically, coating compositions used in the automotive market, especially in the automotive after market, are produced by mixing various bases to give the desired color. These coating compositions are then applied in about 1-5 days after preparation. A major problem is the introduction of aluminum flakes which react with water to generate hydrogen gas. Therefore, the aluminum flake must be segregated from the rest of the water borne components to minimize this hazard. This invention also describes a method for the storage of aluminum flake in an organic medium with introduction of the flakes into the aqueous environment just prior to application of the coating system.

### SUMMARY OF INVENTION

This invention relates to water borne compositions for use in metallic and nonmetallic base coats in a multicoat system for the automotive market. More specially, the present invention is concerned with an acrylic latex coating composition for use in an automotive paint base coat composition. The invention also relates to base coats containing pigments, metallic pigments, organic solvents, and conventional paint additives. The outstanding metal control exhibited by this coating composition is attributed to the rheology control agent and the film shrinkage of the latex vehicle while drying. The use of acrylic latex results in a very fast dry time. This coating composition provides a base coat that satisfy current and proposed volatile organic compound regulations. Even with conventional non-metallic pigment, the coating exhibits excellent appearance.

This invention describes a method for the storage of aluminum flake in an organic medium with introduction of the flakes into the aqueous environment just prior to application of the coating system. This method minimizes the potential hazard of the aluminum flake reacting with water to form hydrogen gas during storage. This method can also be used for the storage of other water sensitive pigments such as copper and brass. Other pigments such as plastic films, mica and coated metallic foils can be stored using this method.

The invention refers to an automotive paint base coat composition comprising
A) an aluminum base composed of metallic flakes slurred into a solution of a solvent borne water dispersible resin in water miscible solvents,
B) a neutralization base which is an aqueous solution containing a dispersed solvent borne water reducible resin neutralized with ammonia and/or amines wherein the neutralization base has a pH range of 7.5 - 10.0,
C) a clear resin base comprising an acrylic latex, organic water miscible solvents, optionally conventional paint additives and 0.5 to 8.0 % by weight of hydrophilic colloidal silica,
D) a pigmented base comprising an acrylic latex grinding polymer, pigments and/or dyestuffs, optionally conventional paint additives and optionally water miscible solvents and
E) a surfactant base containing a polymeric nonionic fluorocarbon surfactant at a level of 0.1 to 5.0 % by weight in water wherein the polymeric nonionic fluorocarbon surfactant contains ethylene oxide linkages, has a weight average molecular weight of 5,000 to 50,000 and contains 2 - 25 % of fluorine by weight of the surfactant.

The automotive base coat paint comprises five components; A) aluminum base, B) neutralization base, C) clear resin base, D) pigmented base, and E) surfactant base. Component A, the aluminum base, is composed of metallic flakes slurred into a solvent borne resin and water miscible solvents. The resin used in this component may be a water reducible acrylic, water reducible polyester, or water reducible alkyd. Commonly used metallic pigments, used singularly or a mixture are copper, copper alloys, aluminum, steel, mica, plastic films, and coated metallic foils, preferably aluminum at a level of 10 - 30 % by weight, preferably 20 - 30 % by weight.

The organic solvent for this base must be water miscible. Examples of solvents are methanol, ethanol, propanol, butanol, N-methylpryyolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether, and dipropylene butyl ether.

Component B, neutralization base, is composed of a solvent borne water reducible resin, neutralized with an amine, preferably ammonia dispersed in water to a level of 10 - 25 %, preferably 10 - 20 % by weight. Excess amine, preferably ammonia, is added at a level of 1 - 10 %, preferably 5 - 10 %, by weight.

Component C, clear resin base, contains; 1) acrylic latex at a level of 10 - 50 %, preferably 25 35 %, 2) 0 - 15 % water miscible solvent, preferably 5 - 12 %, 3) 0,5 - 8,0 % hydrophilic colloidal silica. The hydrophilic silica can be dispersed into the acrylic latex polymer by normal dispersing techniques.

Component D, pigmented base, contains acrylic latex grinding polymer at a level of 5 - 50 %, preferably 15 - 30 %. This level depends on the pigment in the component. The level of pigment in component D is 0.5 - 35 % by weight, this level depends on the pigment characteristics also. Typically, a pigment to binder weight ratio of about 10/100 to 300/100 is accepable. The pigments are typically ground using conventional dispersion equipment such as sand mills, pearl mills, ball mills, horizontal mills, and vertical mills. Optional wetting agents, surfactants, and dispersing aids can be employed.

Component E, surfactant base, contains a polymeric nonionic fluorocarbon surfactant at a level of 0.1 - 5.0 % by weight, preferably 2.0 - 3.0 % in water, wherein the polymeric nonionic fluorocarbon surfactant contains ethylene oxide linkages, has a weight average molecular weight of 5,000 to 50,000 and contains 2 - 25 % of fluorine by weight of the surfactant.

### Description of Invention

This invention is directed to a coating composition for a water borne base coat especially designed for the automotive market. This invention describes a method for the introduction of metallic flakes into a water borne coating resulting in a highly superior base coat. The proper metal fixation is accomplished by the use of a novel rheology control agent which employs hydrophilic silica and a polymeric nonionic fluorocarbon surfactant. The novel rheology control agent described and claimed in copending related U.S. application and filed and incorporated herein by reference. The base coat is broken down into five bases that are combined just prior to application of the base coat.

The invention describes a method for the storage of aluminum flake in an organic medium with introduction of the flakes into the aqueous environment just prior to application of the coating system. This method minimizes the potential hazard of the aluminum flake reacting with water to form hydrogen gas during storage.

Component A, aluminum base, is an aluminum slurry in an organic environment containing either a low to moderate acid number acrylic or polyester or alkyd. The preferred polymer is a water reducible solvent borne acrylic modified with glycidyl esters. The acrylic polymer is prepared via normal solution polymerization techniques. The acrylic polymer is composed of; 1) 3 - 5 % by weight of an ethylenically unsaturated carboxylic acid such as methacrylic acid and acrylic acid, preferably methacrylic acid, 2) 15 - 30 % by weight methylmethacrylate, 3) 5 - 20 % by weight 2-ethylhydroxymethacrylate,4) 1 - 10 % by weight isobornyl methacrylate, and 5) optionally 5 - 20 % by weight of a glycidyl ester of a tertiary C10 fatty acid. The acrylic polymer is prepared in organic solvents that are water miscible, such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether, methyl ethyl ketone and dipropylene butyl ether. Optionally, surfactants can also be present during the polymerization at a level of 0.1 - 2.0 % by weight. The viscosity of the final polymer is 16000 to 18000 cps with a solids content of 50 - 75 % by weight, preferably 55 - 65 % by weight. The acid number of the polymer based on solids should be 10 - 70, preferably 15 - 65.

Any commercial aluminum paste available for solvent borne or water borne applications can be used in the preparation of componentáA. The amount of metallic pigment in the component is 4 - 30 % by weight, preferably 23 - 30 % by weight.

Other nonmetallic and metallic pigments that can bei incorporated into this base include copper, copper alloys, mica, coated metallic foils, plastic flakes and steel. However, this is not an conclusive list.

Additional organic solvent may be needed to reduce the viscosity of the acrylic resin. Acceptable solvents must be water miscible such as methyl ethyl ketone, acetone, ethanol, methanol, propanol, butanol, Nmethylpyrrolidone, glycols, glycol ethers, glycol acetates, diethlene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether. Component A has a total solids of 25 % to 55 % by weight, 5 % to 35 % binder by weight, and 35 % to 50 % organic solvent by weight.

Additional wetting, anti-settling additives common to the paint industry may be added.

The preparation of component A, the aluminum base, is critical for the proper appearance of the aluminum flake in the final coating. The proper amount of the acrylic resin solution is dissolved into the proper amount of water miscible organic solvent, such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether,propylene butyl ether propylene hexyl ether, dipropylene methyl ether, dipropylene ethyl ether, dipropylene propyl ether and dipropylene butyl ether. The proper amount of the aluminum paste is slurred into the above described resin solution. The aluminum slurry must be stirred until the base is smooth and uniform.

Preferably, the aluminum base A) comprises
a1) a solution of a water reducible solvent borne acrylic resin having an acid number of 10 - 70, preferably 15 - 65 %, based on solids and a solids content of 50 - 75 % by weight and
a2) a metallic pigment at a level of 4 - 30 % by weight,
wherein in component A) the total amount of water miscible solvent being 35 - 50 % by weight, the amount of total binder being 5 - 35 % by weight and the amount of total solids being 25 - 55 % by weight.

It is also preferred, that the aluminum base A) comprises
a1) a solution of a water reducible solvent borne polyester resin having an acid number of 10 - 70, preferably 15 - 65, based on solids and a solids content of 50 - 75 % by weight and
a2) a metallic pigment at a level of 4 - 30 % by weight,
wherein in component A) the total amount of water miscible solvent being 35 - 50 % by weight, the amount of total binder being 5 - 35 % by weight and the amount of total solids being 25-- 55 % by weight.

Preferably, the aluminum base A) comprises
a1) a solution of a water reducible solvent borne alkyd resin having an acid number of 10 - 70, preferably 15 - 65, based on solids and a solids content of 50 - 75 % by weight and
a2) a metallic pigment at a level of 4 - 30 % by weight,
wherein in component A) the total amount of water miscible solvent being 35 - 50 % by weight, the amount of total binder being 5 - 35 % by weight and the amount of total solids being 25 - 55 % by weight.

The metallic flakes of the aluminum base A) are preferably composed of aluminum flakes and/or mica flakes.

Component B, neutralization base, is an aqueous solution containing a dispersed solvent borne water reducible resin neutralized with ammonia and/or amines, wherein the neutralization base has a pH range of 7.5 - 10.0. Acrylic resins described above as well as water reducible polyester and alkyd resins may be used. Preferably, the neutralization base contains 0.1 - 15 % by weight of amines and/or ammonia and 5 - 25 % by weight of a water reducible solvent borne acrylic resin, polyester resin and/or alkyd resin having an acid number of 15 - 65 based on solids. An aqueous solution containing 0.1 - 15.0 %, preferably 0.1 - 8.0 % ammonia and/or amines by weight is prepared. The correct amount of the acrylic, alkyd or polyester resin, usually 5 - 25 % by weight, preferably 10 - 20 % by weight, is added to the basic aqueous solution and stirred. The resulting solution should be clear to slightly turbid and have a pH range of 7.5 - 10.0, preferably 8.0 to 10.0. The resulting solution should have a nonvolatile range of 5 - 25 % by weight, preferably 10 - 20 %.

Component C, clear resin base, of the coating composition contains an acrylic latex. Typical properties of this acrylic latex are as follows:

| | |
|---|---|
| Solids content, % | 20 - 60 |
| pH | 7 to 10 |
| Weight per gallon, lbs | 8.0 to 9.0 |
| Minimum film formation temperature, | C 0 to 70 |
| Sward hardness | 25 to 110 |
| Mechanical stability | OK |
| Glass transition temperature, C | 10 to 50 |
| Average molecular weight | 150,000 to 300,000 |
| Number average molecular weight | 30,000 to 60,000 |
| Acid number on solids | 5 to 35 |
| Volatile organic solvents, % | 0 to 20 |
| Particle size, nm | 50 to 150 |

Specially preferred acrylic latics are Neocryl A-622, Neocryl A-640, Neocryl A-6037 sold by ICI resins, Joncryl J-537, Joncryl J-538 sold by Johnson Wax, Arolon 860-W-45 sold by NL Industries. The amount of this acrylic latex in this component is 15-45% by weight, preferably 25-35% by weight. The level of organic solvent in this component is 5.0-30% by weight, preferably 5-15% by weight, and the solvent must be water miscible. Examples of water miscible solvents are methyl ethyl ketone, acetone, ethanol, methanol, propanol, butanol, N-methylpryyolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether. This component may also contain other conventional paint additives such as thickening agents, extenders, plasticizers, stabilizers, light stabilizers, wetting agents, waxes, antifoams, defoamers and catalysts, singly or a multitude of them at the conventional levels.

Hydrophilic colloidal silica is also present in this component at a level of 0.5 - 8.0 % by weight, preferably 2.0 - 3.0 % by weight. The particle size of the hydrophilic colloidal silica is about 1.0 - 10.000 millimicron and a surface area of about 50 - 1200 square meters per gram. The silica is about 99.8 % silicon dioxide by weight and exists in three dimensional branched chain aggregates and has a surface that is hydrophilic and capable of hydrogen bonding. The silica is dispersed into the above resin solution using conventional techniques, such as ball mills, pebble mills, horizontal mills,vertical mills and pearl mills.

Preferably, the clear resin base C) comprises an acryic latex having a solids level of 20 - 60 % by weight and a glass transition temperature of 10 - 50°C and a water miscible solvent at a level of 1.0 - 12.0 % by weight and a total solids content of 20 - 60 % by weight.

Component D, pigmented base, imparts the coloring effect upon the coating composition. The resin used for the dispersing of the pigments is an acrylic latex. Typical properties of this acrylic latex are as follows:

| | |
|---|---|
| Solids content, % | 20 - 60 |
| pH | 7 to 10 |
| Weight per gallon, lbs | 8.0 to 9.0 |
| Minimum film formaion temperature, | C 0 to 70 |
| Sward hardness | 25 to 110 |
| Mechanical stability | OK |
| Glass transitition temperature, C | 10 to 50 |
| Average molecular weight | 150,000 to 300,000 |
| Number average molecular weight | 30,000 to 60,000 |
| Acid number on solids | 5 to 35 |
| Volatile organic solvents, % | 0 to 20 |
| Particle size, nm | 50 to 150 |

Specially preferred acrylic latics are Neocryl A-622, Neocryl A-640, Neocryl A-6037 sold by ICI resins, Joncryl J-537, Joncryl J-538 sold by Johnson Wax, Arolon 860-W-45 sold by NL Industries. The level of this resin in component D is 15-60% by weight, preferably 20-40% by weight. The organic, inorganic pigments and/or dyestuffs are ground with this resin employing standard techniques. Examples of dispersing equipment are ball mills, pebble mills, pearl mills, horizontal mills, and vertical mills. Examples of pigments and dyestuffs but not limited to are titanium dioxide, graphite, carbon black, zinc oxide, cadmium sulfide, chromium oxide, zinc sulfide, zinc chromate, strontium chromate, barium chromate, lead chromate lead cyanamide, lead silico chromate, chromium oxide, zinc sulfide, yellow nickel titanium, yellow chromium titanium, red iron oxide, transparant red oxide, transparent yellow oxide, black iron oxide, ultramarine blue, phthalocyanine complexes, amaranth, quinacridones, and halogenated thioindigo pigments. The level of pigment/dyestuff in Component D is 0.1 to 45.0 % by weight, typically 5 - 25 %. This component may also contain other conventional paint additives such as dispersing aids, anti-settling aids, wetting aids, thickening agents, extenders, plasticizers, stabilizers, light stabilizers, waxes, antifoams, defoamers and catalysts singly or a multitude of them at the conventional levels. Also present in this component is a water miscible solvent such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether at a level of 0 to 25 % by weight, preferably 0 - 12 % by weight.

Preferably, the pigmented base D) comprises
d1) an acrylic latex having a solids level of 20 - 60 % by weight and a glass transition temperature of 10 - 50°C,
d2) water miscible solvents at a level of 0 - 25 % by weight and
d3) inorganic and/or organic pigments and/or dyestuffs at a level of 0.1 - 45 % by weight,
the total solids of component D) being 5 - 60 % by weight.

Component E, surfactant base, contains a polymeric nonionic fluorocarbon surfactant at a level of 0.1 to 5 % by weight, preferably 2.0 to 3.0 % by weight, in water. The polymeric nonionic fluorocarbon surfactant contains ethylene oxide linkages, has a weight average molecular weight of 5,000 to 50,000 and contains 2 - 25 % of fluorine by weight of the surfactant. One preferred nonionic fluorocarbon polymer contains about 30 - 70 % by weight ethylene oxide linkages, 10 - 20 % by weight of fluorine and has a weight average molecular weight of about 10,000 - 30,000.

A base coat composition is preferred wherein the neutralization base B) contains 5 - 25 % by weight of the solvent borne water reducible resin,the clear resin base C) contains 15 - 45 % by weight of the acrylic latex resin and 5 - 30 % by weight of organic water miscible solvents and wherein the total solids content of component C) is 20 - 60 % by weight and wherein the pigmented base D) contains 15 - 60 % by weight of the acrylic latex grinding polymer, 0.1 - 35.0 % by weight of pigments and/or dyestuffs and 0 - 25 % by weight of water miscible solvents.

The final coating composition is produced by mixing Components A through E together in order and at appropriate levels to give the desired color and metallic effect. Typically, the solids of the final coating is 5 to 30 % by weight, organic levels 5 to 15 % by weight. The rheology of the coating is defined by the amount of colloidal silica and polymeric nonionic fluorocarbon surfactant present in the coating. The level of colloidal silica is 0.5 to 5.0 % and 0.05 to 1.0 % of polymeric nonionic fluorocarbon surfactant by weight of water used in the final base coat formulation. The water content ranges between 30 to 90 % by weight of the final base coat composition.

Other water reducible resins may be added to the coating to improve certain film properties such as aqueous one-component aliphatic polyurethane dispersions, polyesters, and alkyds.

Additional anionic and nonionic surfactants can be added to the paint composition to increase wetting of the substrate by the coating such as FC120, FC430 sold by 3M, Surfonyl 104, Surfonyl 440 sold by Air Products, Triton X100 sold by Rohm and Haas, Troysol LAC sold by Troy Chemical Company, Aerosol OT's sold by American Cyanamid including the salts of dialkyl sulfosuccinates and Igepal's sold by GAF including the ethoxylated alkyl phenols.

The viscosity of the final base coat is about 10 Pas at a shear rate of 0.001 1/s and 0.05 at a shear rate of 1,000 1/s. This base coat exhibits a very high viscosity at low shear rate while having a low viscosity at high shear rates. This phenomenon results in the outstanding metal effect this coating composition posses. The efflux time of the coating through a #4 Ford cup is 15 to 30 seconds at 23°C.

The coating composition can be applied using conventional spray equipment or high volume low pressure spray equipment resulting in a high quality finish. After a flash off time of 15 to 45 minutes, a transparent top coat can be applied over this base coat. Example of transparent top coats are two component, based on acrylic and/or polyester resins cured with polyisocyanates, silanes, and acid cured epoxy coatings, however, this is not an inclusive list. The preferred transparent top coat is a two component acrylic polyisocyanate coating.

The invention also refers to a method of forming a base coat composition wherein the above described aluminum base A), the neutralization base B), the clear resin base C), the pigmented base D) and the surfactant base E) are combined just prior to application of the base coat.

Preferably, the aluminum base A) is mixed with the neutralization base B) and then the clear resin base C), the pigmented base D) and the surfactant base E) are added.

### Preferred Embodiments of Invention

The following examples illustrate the invention without limiting the scope thereof.

### Example 1: Base Coat Preparation

### Preparation of an Acrylic Polymer modified with A Glycidyl Ester of Tertary C10 Fatty Acid.

A five liter three neck round bottomed flask was fitted with an agitator, thermometer, condenser, nitrogen inlet and monomer inlet and charged with 680 g of methoxypropanol, 20 g of methyl ethyl ketone. The mixture was brought to reflux and the temperature adjusted to 140-141 C by adding 5.0 g of methyl ethyl ketone. A monomer solution was prepared containing 333 g of propenoic acid, 847 g of methyl-2-methyl-2-propionate, 450 g of 2-ethylhexyl-2-methylpropionate, 180 g of isobornyl-2-methyl-2-propionate and 27 g of Surfynol 440. An initiator solution was also prepared containing 36 g of t-butyl peroxybenzoate and 76 g of methoxypropanol. The above monomer solution and initiator solutions were added to the reaction flask at a uniform rate over two hours. After completion of the additions, the monomer line was flushed with 35.0 g of methoxypropanol and a solution containing 15 g of t-butylperoxybenzoate and 40 g of methoxypropanol was then added over 10 minutes. The reaction was then refluxed for an additional 135 minutes. After refluxing, 475 g of a glycidyl ester of a tertiary C10 fatty acid was added to the flask, heated to reflux and reacted to constant acid value. The reaction was allowed to cool, then 43 g of methoxypropanol and 588 g of ethanol were added to the resin to reduce the viscosity. The properties of the resin are: viscosity Z5-Z6, solids 60-61%, and acid number of 53 to 56 based on solids.

### Preparation of Component A - Aluminum Base

The acrylic resin described above, 44.0 g, was added to 19.0 g of butoxyethanol. This mixture was stirred until a homogeneous solution was produced. A commercial solvent borne aluminum paste, 38.0 g was added to the resin solution. The resulting slurry was then stirred until a smooth, uniform slurry was produced. This aluminum base contains 49.8 % by weight of volatile organic solvents, 38.4 % by weight of solids, and 24.3 % by weight of aluminum flake.

### Preparation of Component B - Neutralization Base

To 300 g of deionized water, 8.0 g of 30 % aqueous ammonia was added. The solution was stirred well before adding 100.0 g of the acrylic resin described above. The resulting mixture was stirred until the solution was clear to slightly turbid. The nonvolatile level of this base was 14.8 % by weight, water level 74.9 % by weight, volatile organic solvent 9.8 % by weight. The final pH of this dispersion was 9.2.

### Preparation of Component C - Clear Resin Latex

Premixed were 48.0 g of hydrophilic colloidal silica, 10.0 g of a defoamer and 1865 g of Neocryl A-622. This mixture was than ground on a horizontal mill until a particle size of less than 8 microns was achieved. Deionized water, 260 g, was then added to the above slurry under agitation to yield an uniform latex solution. The level of silica was 2.2 % by weight. Volatile organic level was 8.9 % by weight, and solids level was 28.3 % by weight.

### Preparation of Component D - Pigmented Bases

The following pigment slurry was prepared, 80 g Neocryl A-6037, 2.1 g of 30% aqueous ammonia, 23.9 g of transparent red oxide, and 0.2 g of a defoamer. The above components were mixed together and predispersed using a Cowles blade. The mixture was then ground on a horizonal mill until the desired particle size was achieved. A let down solution containing 70.0 g of Neocryl A-6037 and 2.0 g of 30% aqueous ammonia was added to the grind portion. The resulting pigment paste was reduced under agitation with a solution containing 5.75g of deionized water, 19.2 g of butoxyethanol. The resulting pigmented base had a pH of 9.2, a solids level of 48 % by weight, a volatile organic level of 9.4 % by weight, a binder level of 36.2 % by weight, a pigment level of 11.8 % by weight and a water level of 42.0 % by weight.

### Preparation of Component E - Surfactant Base

To 48 g of deionized water, 2.0 g of a ploymeric nonionic fluorocarbon surfactant was added. The mixture was stirred to give a slightly turbid solution.

### EXAMPLE 2 - PREPARATION OF A WATER BORNE RED METALLIC BASE COAT

| Component | Parts by Weight |
|---|---|
| Component B Neutralization Base | 4.0 |
| Component A Aluminum Base | 2.0 |
| Component C Clear Resin Base | 72.0 |
| Component D Pigmented Base | 13.0 |
| Component E Surfactant Base | 9.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventual spray equipment until hiding was achieved. The basecoat was allowed to flash for 30 minutes and then clear coated with a transparent coating based on isocyanate technology. The final properties of the base coat after coating with a convential polyurethane clear coat are listed below including appearance ratings.

| Properties of the Red Metallic Base Coat and Base Coat, Clear Coat System | |
|---|---|
| Property | Value |
| Water | 68.9 % |
| Volatile Organic | 9.1 % |
| Pigment | 2.1 % |
| Nonvolatile | 28.1 % |
| Binder | 24.0 % |
| Weight per Gallon (lbs/gal) | 8.3 |
| VOC (lbs/gal) | 2.2 |
| Gloss, 20 deg | 82 |
| DOI | 85 |
| Adhesion | good |
| Film Thickness (mil) | 1.0 |
| Humidity | good |
| Water Spray | excell. |
| Metal Control | excell. |

### EXAMPLE 3 - Preparation of a Water Borne Silver Metallic

| | |
|---|---|
| Component B Neutralization Base | 18.0 |
| Component A Aluminum Base | 9.1 |
| Component C Clear Base | 63.6 |
| Component D Surfactant Base | 9.1 |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventual spray equipment until hiding was achieved. The base coat was allowed to flash for 30 minutes and then clear coated with a transparent coating based on isocyanate technology. The final properties of the base coat after coating with a convential polyurethane clear coat are listed below, including appearance ratings.

| Properties of the Silver Metallic Base Coat and Base Coat, Clear Coat System | |
|---|---|
| Property | Value |
| Water | 67.9 % |
| Volatile Organic | 12.2 % |
| Pigment | 2.5 % |
| Nonvolatile | 24.4 % |
| Binder | 22.8 % |
| Weight/Gallon (lbs/gal) | 8.3 |
| VOC (lbs/gal) | 3.0 |
| Gloss, 20 | 83 |
| DOI | 82 |
| Adhesion | good |
| Film Thickness (mil) | 0.8 |
| Humidity | good |
| Water Spray | excell. |
| Metal Control | excell. |

## Claims

1. An automotive paint base coat composition comprising
A) an aluminum base composed of metallic flakes slurred into a solution of a solvent borne water dispersible resin in water miscible solvents,
B) a neutralization base which is an aqueous solution containing a dispersed solvent borne water reducible resin neutralized with ammonia and/or amines wherein the neutralization base has a pH range of 7.5 - 10.0,
C) a clear resin base comprising an acrylic latex, organic water miscible solvents, optionally conventional paint additives and 0.5 to 8.0 % by weight of hydrophilic colloidal silica,
D) a pigmented base comprising an acrylic latex grinding polymer, pigments and/or dyestuffs, optionally conventional paint additives and optionally water miscible solvents and
E) a surfactant base containing a polymeric non-ionic fluorocarbon surfactant at a level of 0.1 to 5.0 % by weight in water wherein the polymeric nonionic fluorocarbon surfactant contains ethylene oxide linkages, has a weight average molecular weight of 5,000 to 50,000 and contains 2 -25 % of fluorine by weight of the surfactant.

2. The base coat composition of claim 1 wherein the neutralization base B) contains 5 - 25 % by weight of the solvent borne water reducible resin, the clear resin base C) contains 15 - 45 % by weight of the acrylic latex resin and 5 - 30 % by weight of organic water miscible solvents and wherein the total solids content of component C) is 20 - 60 % by weight and wherein the pigmented base D) contains 15 - 60 % by weight of the acrylic latex grinding polymer, 0.1 - 35.0 % by weight of pigments and/or dyestuffs and 0 - 25 % by weight of water miscible solvents.

3. The base coat composition of claim 1 or 2, wherein the aluminum base A) comprises
a1) a solution of a water reducible solvent borne acrylic resin having an acid number of 10 - 70, preferably 15 - 65, based on solids and a solids content of 50 - 75 % by weight and
a2) a metallic pigment at a level of 4 - 30 % by weight,
wherein in component A) the total amount of water miscible solvent being 35 - 50 % by weight, the amount of total binder being 5 - 35 % by weight and the amount of total solids being 25 - 55 % by weight.

4. The base coat composition of claim 1 or 2 wherein the aluminum base A) comprises
a1) a solution of a water reducible solvent borne polyester resin having an acid number of 10 - 70, preferably 15 - 65, based on solids and a solids content of 50 - 75 % by weight and
a2) a metallic pigment at a level of 4 - 30 % by weight,
wherein in component A) the total amount of water miscible solvent being 35 - 50 % by weight, the amount of total binder being 5 - 35 % by weight and the amount of total solids being 25 - 55 % by weight.

5. The base coat composition of claim 1 or 2 wherein the aluminum base A) comprises
a1) a solution of a water reducible solvent borne alkyd resin having an acid number of 10 - 70, preferably 15 - 65, based on solids and a solids content of 50 - 75 % by weight and
a2) a metallic pigment at a level of 4 - 30 % by weight,
wherein in component A) the total amount of water miscible solvent being 35 - 50 % by weight, the amount of total binder being 5 - 35 % by weight and the amount of total solids being 25 - 55 % by weight.

6. The base coat composition of claims 1 to 5 wherein the metallic flakes of the aluminum base A) are composed of aluminum flakes and/or mica flakes.

7. The base coat composition of claims 1 to 6 wherein the neutralization base contains 0,1 - 15 % by weight of amines and/or ammonia and 5 - 25 % by weight of a water reducible solvent borne acrylic resin, polyester resin and/or alkyd resin having an acid number of 15 - 65 based on solids.

8. The base coat composition of claims 1 to 7 wherein the clear resin base C) comprises an acrylic latex having a solids level of 20 - 60 % by weight and a glass transition temperature of 10 - 50 °C and a water miscible solvent at a level of 1.0 - 12.0 % by weight and a total solids content of 20 - 60 % by weight.

9. The base coat composition of claims 1 to 8 wherein the particle size of the hydrophilic colloidal sillica of the clear resin base C) being 1.0 - 10.000 millimicrons.

10. The base coat composition of claims 1 to 9 wherein the pigmented base D) comprising
d1) an acrylic latex having a solids level of 20 - 60 % by weight and a glass transition temperature of 10 - 50 °C,
d2) water miscible solvents at a level of 0 - 25 % by weight and
d3) inorganic and/or organic pigments and/or dyestuffs at a level of 0.1 - 45 % by weight,
the total solids of component D) being 5 - 60 % by weight.

11. The base coat composition of claims 1 to 10 that is further overcoated with a clear coat composition, preferably with a polyurethane clear coat composition.

12. A method of forming a base coat composition according to claims 1 to 11 wherein the aluminum base A), the neutralization base B), the clear resin base C), the pigmented base D) and the surfactant base E) are combined just prior to application of the base coat.

13. A method of forming a base coat composition according to claim 12 the method consisting of mixing the aluminum base A) with the neutralization base B) and then adding the clear resin base C), the pigmented base D) and the surfactant base E).

## Patentansprüche

1. Automobil-Basislackzusammensetzung bestehend aus
A) einer Aluminiumbasis aus Metallschuppen, die in einer Lösung aus lösungsmittelhaltigem, in Wasser dispergierbarem Harz in mit Wasser mischbaren Lösungsmitteln aufgeschlämmt werden,
B) einer Neutralisationsbasis, bei der es sich um eine wäßrige Lösung mit einem dispergierten lösungsmittelhaltigen, wasserverdünnbaren Harz handelt, das mit Ammoniak und/oder Aminen neutralisiert wurde, wobei die Neutralisationsbasis einen pH-Bereich von 7,5-10,0 aufweist,
C) einer Klarharzbasis aus Acryllatex, organischen mit Wasser mischbaren Lösungsmitteln, gegebenenfalls herkömmlichen Lackzusatzstoffen sowie 0,5 bis 8,0 Gew.-% hydrophiler kolloider Kieselsäure,
D) einer pigmentierten Basis aus einem Mahlpolymer aus Acryllatex, Pigmenten und/oder Farbstoffen, gegebenenfalls herkömmlichen Lackzusatzstoffen sowie gegebenenfalls mit Wasser mischbaren Lösungsmitteln und
E) einer Tensidbasis mit einem Gehalt an polymerem nichtionischem Fluorkohlenstofftensid von 0,1 bis 5,0 Gew.-% in Wasser, wobei das polymere nichtionische Fluorkohlenstofftensid Ethylenoxid-Verknüpfungen enthält, ein gewichtsmittleres Molekulargewicht von 5000 bis 50 000 aufweist und 2-25% Fluor bezüglich des Gewichts an Tensid enthält.

2. Basislackzusammensetzung nach Anspruch 1, worin die Neutralisationsbasis B) 5-25 Gew.-% des lösungsmittelhaltigen, wasserverdünnbaren Harzes enthält, die Klarharzbasis C) 15-45 Gew.-% des Harzes aus Acryllatex und 5-30 Gew.-% an mit Wasser mischbaren organischen Lösungsmitteln enthält, und worin der Gesamtfeststoffgehalt der Komponente C) 20-60 Gew.-% beträgt, und worin die pigmentierte Basis D) 15-60 Gew.-% des Mahlpolymers aus Acryllatex, 0,1-35,0 Gew.-% an Pigmenten und/oder Farbstoffen sowie 0-25 Gew.-% an mit Wasser mischbaren Lösungsmitteln enthält.

3. Basislackzusammensetzung nach Anspruch 1 oder 2, worin die Aluminiumbasis A)
a1) eine Lösung eines wasserverdünnbaren, lösungsmittelhaltigen Acrylharzes mit einer feststoffbezogenen Säurezahl von 10-70, vorzugsweise 15-65, und einem Feststoffgehalt von 50-75 Gew.-% und
a2) ein Metallpigment in einer Menge von 4-30 Gew.-% enthält,
wobei in der Komponente A) die Gesamtmenge an mit Wasser mischbarem Lösungsmittel 35-50 Gew.-%, der Gesamtbindemittelanteil 5-35 Gew.-% und der Gesamtfeststoffanteil 25-55 Gew.-% betragen.

4. Basislackzusammensetzung nach Anspruch 1 oder 2, worin die Aluminiumbasis A)
a1) eine Lösung eines wasserverdünnbaren, lösungsmittelhaltigen Polyesterharzes mit einer feststoffbezogenen Säurezahl von 10-70, vorzugsweise 15-65, und einem Feststoffgehalt von 50-75 Gew.-% und
a2) ein Metallpigment in einer Menge von 4-30 Gew.-% enthält,
wobei in der Komponente A) die Gesamtmenge an mit Wasser mischbarem Lösungsmittel 35-50 Gew.-%, der Gesamtbindemittelanteil 5-35 Gew.-% und der Gesamtfeststoffanteil 25-55 Gew.-% betragen.

5. Basislackzusammensetzung nach Anspruch 1 oder 2, worin die Aluminiumbasis A)
a1) eine Lösung eines wasserverdünnbaren, lösungsmittelhaltigen Alkydharzes mit einer feststoffbezogenen Säurezahl von 10-70, vorzugsweise 15-65, und einem Feststoffgehalt von 50-75 Gew.-% und
a2) ein Metallpigment in einer Menge von 4-30 Gew.-% enthält,
wobei in der Komponente A) die Gesamtmenge an mit Wasser mischbarem Lösungsmittel 35-50 Gew.-%, der Gesamtbindemittelanteil 5-35 Gew.-% und der Gesamtfeststoffanteil 25-55 Gew.-% betragen.

6. Basislackzusammensetzung nach Ansprüchen 1 bis 5, worin die Metallschuppen der Aluminiumbasis A) aus Aluminiumschuppen und/oder Glimmerschuppen bestehen.

7. Basislackzusammensetzung nach Ansprüchen 1 bis 6, worin die Neutralisationsbasis 0,1-15 Gew.-% Amine und/oder Ammoniak und 5-25 Gew.-% eines wasserverdünnbaren, lösungsmittelhaltigen Acrylharzes, Polyesterharzes und/oder Alkydharzes mit einer feststoffbezogenen Säurezahl von 15-65 enthält.

8. Basislackzusammensetzung nach Ansprüchen 1 bis 7, worin die Klarharzbasis C) einen Acryllatex mit einem Feststoffgehalt von 20-60 Gew.-% und einer Glasübergangstemperatur von 10-50°C sowie ein mit Wasser mischbares Lösungsmittel in einer Menge von 1,0-12,0 Gew.-% enthält und einen Gesamtfeststoffgehalt von 20-60 Gew.-% aufweist.

9. Basislackzusammensetzung nach Ansprüchen 1 bis 8, worin die Teilchengröße der hydrophilen kolloiden Kieselsäure der Klarharzbasis C) 1,0-10 000 Millimikron beträgt.

10. Basislackzusammensetzung nach Ansprüchen 1 bis 9, worin die pigmentierte Basis D)
d1) einen Acryllatex mit einem Feststoffgehalt von 20-60 Gew.-% und einer Glasübergangstemperatur von 10-50°C,
d2) mit Wasser mischbare Lösungsmittel in einer Menge von 0-25 Gew.-% und
d3) anorganische und/oder organische Pigmente und/oder Farbstoffe in einer Menge von 0,1-45 Gew.-% enthält,
wobei der Gesamtfeststoffanteil der Komponente D) 5-60 Gew.-% beträgt.

11. Basislackzusammensetzung nach Ansprüchen 1 bis 10, die weiterhin mit einer Klarlackzusammensetzung, vorzugsweise mit einer Klarlackzusammensetzung aus Polyurethan, überlackiert wird.

12. Verfahren zur Herstellung einer Basislackzusammensetzung nach Ansprüchen 1 bis 11, worin die Aluminiumbasis A), die Neutralisationsbasis B), die Klarharzbasis C), die pigmentierte Basis D) sowie die Tensidbasis E) erst unmittelbar vor Auftrag des Basislacks zusammengebracht werden.

13. Verfahren zur Herstellung einer Basislackzusammensetzung nach Anspruch 12, das darin besteht, daß man die Aluminiumbasis A) mit der Neutralisationsbasis B) vermischt und sodann mit der Klarharzbasis C), der pigmentierten Basis D) und der Tensidbasis E) versetzt.

## Revendications

1. Composition de revêtement de fond pour peinture automobile comprenant
A) une base d'aluminium composée de paillettes métalliques en suspension dans une solution de résine suspendue dans un solvant et hydrodispersable, dans des solvants miscibles à l'eau,
B) une base neutralisante qui est une solution aqueuse contenant une résine dispersée, suspendue dans un solvant et hydroréductible, neutralisée par de l'ammoniaque et/ou des amines, dans laquelle la base neutralisante a un pH de l'ordre de 7,5 - 10,0,
C) une base de résine transparente comprenant un latex acrylique, des solvants organiques miscibles à l'eau, le cas échéant des adjuvants classiques de peinture et 0,5 à 8,0 % en poids de silice colloïdale hydrophile,
D) une base pigmentée comprenant un polymère broyé en latex acrylique, des pigments et/ou des matières colorantes, éventuellement des adjuvants classiques de peinture et éventuellement des solvants miscibles à l'eau et
E) une base tensioactive contenant un agent tensioactif polymère non ionique fluorocarboné dans une proportion de 0,1 à 5,0 % an poids dans de l'eau, dans laquelle l'agent tensioactif polymère non ionique fluorocarboné contient des motifs d'oxyde d'éthylène, a un poids moléculaire moyen de 5.000 à 50.000 et contient 2 - 25 % de fluor en poids d'agent tensioactif.

2. Composition de revêtement de fond selon la revendication 1, dans laquelle la base neutralisante B) contient 5 - 25 % en poids de résine suspendue dans un solvant, hydroréductible, la base de résine transparente C) contient 15 - 45 % en poids de résine latex acrylique et 5 - 30 % en poids de solvants organiques miscibles à l'eau et dans laquelle le taux total de constituants solides du composant C) est de 20 - 60 % en poids et dans laquelle la base pigmentée D) contient 15 - 60 % en poids du polymère broyé en latex acrylique, 0,1 - 35,0 % en poids de pigments et/ou des matières colorantes et 0 - 25 % en poids de solvants miscibles à l'eau.

3. Composition de revêtement de fond selon la revendication 1 ou 2, dans laquelle la base d'aluminium A) comprend
a1) une solution de résine acrylique suspendue dans un solvant, hydroréductible, ayant un indice d'acide de 10 - 70, de préférence 15 - 65, sur la base de constituants solides et un taux de constituants solides de 50 - 75 % en poids et
a2) un pigment métallique dans une proportion de 4 - 30 % en poids,
dans laquelle, dans le composant A), la quantité totale de solvant miscible à l'eau est de 35 - 50 % en poids, la quantité totale de liant est de 5 - 35 % en poids et la quantité totale de constituants solides est de 25 - 55 % en poids.

4. Composition de revêtement de fond selon la revendication 1 ou 2, dans laquelle la base d'aluminium A) comprend
a1) une solution de résine polyester suspendue dans un solvant, hydroréductible, ayant un indice d'acide de 10 - 70, de préférence 15 - 65, sur la base des constituants solides et un taux de constituants solides de 50 - 75 % en poids et
a2) un pigment métallique dans une proportion de 4 - 30 % en poids,
dans laquelle, dans le composant A), la quantité totale de solvant miscible à l'eau est de 35 - 50 % en poids, la quantité totale de liant est de 5 - 35 % en poids et la quantité totale de constituants solides est de 25 - 55 % en poids.

5. Composition de revêtement de fond selon la revendication 1 ou 2, dans laquelle la base d'aluminium A) comprend
a1) une solution de résine alkyde suspendue dans un solvant, hydroréductible, ayant un indice d'acide de 10 - 70, de préférence 15 - 65, sur la base de constituants solides et un taux de constituants solides de 50 - 75 % en poids et
a2) un pigment métallique dans une proportion de 4 - 30 % en poids,
dans laquelle, dans le composant A), la quantité totale de solvant miscible à l'eau est de 35 - 50 % en poids, la quantité totale de liant est de 5 - 35 % en poids et la quantité totale de constituants solides est de 25 - 55 % en poids.

6. Composition de revêtement de fond selon les revendications 1 à 5, dans laquelle les paillettes métalliques de la base d'aluminium A) sont composées de paillettes d'aluminium et/ou de paillettes de mica.

7. Composition de revêtement de fond selon les revendications 1 à 6, dans laquelle la base neutralisante contient de 0,1 - 15 % en poids d'amines et/ou d'ammoniaque et 5 - 25 % en poids d'une résine acrylique, d'une résine polyester et/ou d'une résine alkyde suspendues dans un solvant et hydroréductibles, ayant un indice d'acide de 15 - 65 sur la base de constituants solides.

8. Composition de revêtement de fond selon les revendications 1 à 7, dans laquelle la base de résine transparente C) comprend un latex acrylique ayant une proportion de constituants solides de 20 - 60 % en poids et une température de transition vitreuse de 10 - 50 °C et une proportion de solvant miscible à l'eau de 1,0 - 12,0 % en poids et un taux total de constituants solides de 20 - 60 % en poids.

9. Composition de revêtement de fond selon les revendications 1 à 8, dans laquelle la grosseur de particule de la silice colloïdale hydrophile de la base de résine transparente C) est de 1,0 - 10,000 millimicrons.

10. Composition de revêtement de fond selon les revendications 1 à 9, dans laquelle la base pigmentée D) comprend
d1) un latex acrylique contenant une proportion de constituants solides de 20 - 60 % an poids et une température de transition vitreuse de 10 - 50°C,
d2) des solvants miscibles à l'eau dans une proportion de 0 - 25 % en poids et
d3) des pigments inorganiques et/ou organiques et/ou des matières colorantes dans une proportion de 0,1 - 45 % en poids,
le total de constituants solides du composé D) étant de 5 - 60 % en poids.

11. Composition de revêtement de fond selon les revendications 1 à 10, qui est ensuite revêtue d'une composition de revêtement transparente, de préférence une composition de revêtement transparente à base de polyuréthane.

12. Procédé de réalisation d'une composition de revêtement de fond selon les revendications 1 à 11, dans lequel la base d'aluminium A), la base neutralisante B), la base de résine transparente C), la base pigmentée D) et la base tensioactive E) sont mélangées juste avant l'application du revêtement de fond.

13. Procédé de réalisation d'une composition de revêtement de fond selon la revendication 12, le procédé consistant à mélanger la base d'aluminium A) avec la base neutralisante B), puis à ajouter la base de résine transparente C), la base pigmentée D) et la base tensioactive E).
